(19) Europäisches Patentamt
European Patent Office
Office européen des brevets

(11) Publication number: **0 024 728**
**B1**

(12) **EUROPEAN PATENT SPECIFICATION**

(45) Date of publication of patent specification: **23.11.83**

(21) Application number: **80105104.6**

(22) Date of filing: **27.08.80**

(51) Int. Cl.[3]: **C 08 L 101/02,**
C 08 L 67/00, C 08 L 31/08,
C 08 L 33/06, C 08 L 57/04,
C 08 L 61/20, C 08 J 3/24
//C09D3/82

(54) **Thermosetting resin composition.**

(30) Priority: **27.08.79 JP 109364/79**

(43) Date of publication of application:
**11.03.81 Bulletin 81/10**

(45) Publication of the grant of the patent:
**23.11.83 Bulletin 83/47**

(84) Designated Contracting States:
**BE DE FR GB IT**

(56) References cited:
**DE - A - 1 595 654**

(73) Proprietor: **KANEGAFUCHI KAGAKU KOGYO KABUSHIKI KAISHA**
**2-4 Nakanoshima 3-chome**
**Kita-ku Osaka-shi (JP)**

(72) Inventor: **Kato, Yasushi**
**1-27-14, Katayama-cho**
**Nagata-ku, Kobe-shi Hyogo-ken (JP)**
Inventor: **Furukawa, Hisao**
**Sansieso 96-1, Aza-Takigahira Shioya-cho**
**Tarumi-ku, Kobe-shi Hyogo-ken (JP)**
Inventor: **Nakatsuka, Saori**
**11-20, Hama-cho**
**Ashiya-shi, Hyogo-ken (JP)**
Inventor: **Matsumura, Shoichi**
**14-2, 1-chome Takakuradai**
**Suma-ku, Kobe-shi, Hyogo-Ken (JP)**

(74) Representative: **Vossius Vossius Tauchner Heunemann Rauh**
**Siebertstrasse 4 P.O. Box 86 07 67**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Thermosetting resin composition

The present invention relates to a thermosetting resin composition.

Compounds containing reactive silyl groups have a wide application in various technical fields such as paints, coating compositions, adhesives for rubber, silane coupling agents and sealants. In particular silyl groups containing compounds of the condensation type which cure at normal temperatures and contain hydroxy groups, acetoxy groups, oxime groups, alkoxy groups and the like as reactive groups have a particularly wide range of application.

DE—AS—1 595 654 describes a process for preparing self-cross-linking polymers by homo or copolymerizing olefinically unsaturated carboxylic acid amides, carboxylic acid imides, ureas or urethanes bearing substituted N-methylol groups, the homo or copolymerization being performed in bulk or solution, optionally in admixture with other olefinically unsaturated monomers. This process is characterized in that in the olefinically unsaturated monomers bearing substituted methylol groups the methylol groups are etherified by trialkylsilyl groups. However, a copolymer of N-trimethylsilyloxymethylmethacrylamide and acrylic acid ethyl ester prepared by this method requires treatment with $H_2SO_4$ for 10 minutes until a cross-linked gel-like product is formed and only after baking for 30 minutes at 150°C is this copolymer insoluble in xylene.

Although the inventors of the present invention already found such reactive silyl groups-containing compounds applicable in those uses and catalysts for curing them at room temperature or higher temperatures, they have never succeeded in obtaining such catalysts that yield thermoset products with satisfactory properties after short time curing. As a result of studying various kinds of catalysts, we could find that reactive silyl groups-containing compounds can be cured at temperatures from 200 to 280°C in a rather short time such as from 45 to 60 seconds. The present invention therefore relates to a thermosetting resin composition comprising as essential components

(A) a polyester, vinyl polymer, diallyl phthalate monomer or prepolymer or diallyl phthalate copolymer containing in the molecule at least one silyl group having at least one hydrolyzable group or a mixture of at least two of the said polymers, and

(B) a hardening additive

characterized in that it contains as component (B) an amino resin having a molecular weight of up to 5000.

The silyl groups-containing compounds used in the present invention can be prepared by an addition-reaction of a silane with compounds containing terminal carbon-carbon double bonds or double bonds in their side chains in the presence of a platinum catalyst.

The compounds containing terminal carbon-carbon double bonds or double bonds in their side chains and to be used for preparing e.g. paints, coating compositions, rubber adhesives, silane coupling agents or sealants at which the present invention is aiming include 1) polyesters, 2) vinyl polymers, 3) diallyl phthalate or prepolymers thereof and 4) diallyl phthalate copolymers or their mixtures.

Polyesters containing terminal carbon-carbon double bonds or double bonds in their side chains can be obtained by reacting for example a polyester containing terminal hydroxy groups, e.g. products sold under the trade mark DESMOPHENE manufactured by Japan-Polyurethane Co., Ltd., with acryloyl chloride in the presence of a base such as sodium hydride or by a condensation-reaction of a dibasic acid with a diol with a partial addition of allylglycidylether as a diol component. Such polyesters can be obtained also by a transesterification reaction between a polyester containing terminal hydroxy groups and a diallyl ester such as diallyl phthalate in the presence of a transesterification catalyst such as toluene sulfonic acid. Such polyesters can be obtained also by a condensation reaction of an excess of a dibasic acid and a diol whereby allyl alcohol is added during or after the reaction. Furthermore, polyesters containing olefin groups of the allyl type in their molecule can be obtained by reacting acid anhydrides with epoxy compounds and with allyl alcohol in the presence of salts of tertiary amines or quaternary ammonium salts, in order to regulate their molecular weight and simultaneously to introduce allyl groups. In this reaction allyl groups can be introduced in the polymer by using allyl glycidylether as epoxy compound. Polyesters containing acryloyl or methacryloyl groups can be obtained according to known methods by condensation of diols with dibasic acids and acrylic acid or methacrylic acid.

Silyl groups containing polyesters having a molecular weight of from 300 to 8000 are preferred.

Vinyl polymers containing carbon-carbon double bonds can be obtained by a radical homopolymerization of allyl acrylate or allyl methacryalte and the like or copolymerization of vinyl compounds such as styrene, $\alpha$-methyl styrene, acrylic acid and its esters, methacrylic acid and its esters, acrylamide, vinyl acetate, ethylene, maleic anhydride and the like.

Silyl groups containing vinyl polymers having a molecular weight of from 300 to 20,000 are preferred.

Diallyl phthalates containing carbon-carbon double bonds include monomeric diallyl phthalate and prepolymers thereof. Commercially available diallyl phthalates may be used. Preferred silyl groups containing diallyl phthalate prepolymers have a molecular weight of 20,000 or less.

Diallyl phthalate copolymers containing carbon-carbon double bonds can be obtained by copolymerizing diallyl phthalate with an acrylic ester or methacrylic ester in the presence of initiators for radical polymerization such as azo compounds, peroxides and the like. The number of double bonds can be controlled by changing the amount of diallyl phthalate used as a copolymerization component.

Silyl groups containing diallyl phthalate copolymers having a molecular weight of from 300 to 20,000 and comprising diallyl phthalate and an acrylic ester or methacrylic ester are preferred.

Silanes, i.e. compounds containing at least one hydrogen atom bonded to a silicium atom include silane halogenides such as trichlorosilane, methyldichlorosilane, dimethylchlorosilane and phenyldichlorosilane, alkoxysilanes, such as trimethoxysilane, triethoxysilane, methyldimethoxysilane, methyldiethoxysilane and phenyldimethoxysilane, acyloxysilanes such as methyldiacetoxysilane and phenyldiacetoxysilane; ketoximatesilanes such as bis-(dimethylketoximate)-methylsilane and bis-(cyclohexylketoximate)methylsilane, and the like. When using organo halogen silanes they are substituted by other hydrolyzable groups after the hydrosilylation.

Vinyl polymers containing silyl groups are obtained by copolymerizing a silyl group-containing vinyl compound such as vinyltrimethoxysilane, $\gamma$-methacryloxypropyltrimethoxysilane or $\gamma$-methacryloxypropylmethyldimethoxysilane with a vinyl compound such as styrene, $\alpha$-methylstyrene, acrylic acid and its esters, methacrylic acid and its esters, acrylamide, vinyl acetate, ethylene or maleic anhydride. Vinyl polymers containing silyl groups can be obtained also by reacting an organic polymer containing epoxy groups such as a copolymer of glycidyl methacrylate and a vinyl compound with $\gamma$-aminopropyltrimethoxysilane. Polyesters and vinyl polymers containing silyl groups can be obtained also by reacting an organic polymer, such as a polyester or a vinyl polymer containing carboxy groups with $\gamma$-glycidoxypropyltrimethoxysilane. The silyl groups-containing compounds obtained in such a manner contain at least one hydrolyzable group bonded to a silicium atom. These compounds can be cured in the presence of water. A variety of silyl groups may be obtained depending on their method of preparation. These silyl groups can be expressed by the following general formula:

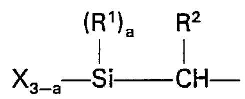

wherein $R^1$ and $R^2$ are hydrogen atoms or monovalent hydrocarbon groups containing up to 10 carbon atoms selected from the group alkyl groups, aryl groups and aralkyl groups; X is an alkoxy group, hydroxy group, acyloxy group, aminoxy group, phenoxy group, thioalkoxy group or amino group; and a is an integer of from 0 to 2.

Amino resins such as the various melamine resins, urea resins and guanamine resins having a molecular weight of up to 5,000 are used. The amino resin is used in an amount of from 5 to 50 parts by weight, preferably from 10 to 30 parts by weight per 100 parts by weight of the component (A) although the ratio is not particularly critical.

Furthermore, ethyl silicate, methyl-trimethoxysilane, silane coupling agents and other organopolysiloxanes containing at least one hydrolyzable group in their molecule can be incorporated into the thermosetting resin composition.

The resin composition according to the present invention may be used as a fast baking coating composition for precoating metals, car bodies and car bumpers. The substrate can be for instance galvanized steel, aluminium or glass. The resin composition may be used in the form of a mixture with pigments, fillers and other conventional additives. Furthermore, it may be used in the form of a mixture with a known lacquer paint, acryl-lacquer paint, thermosetting acrylic resin paint, alkyd resin paint, melamine resin paint or epoxy resin paint. The resin composition may be used also as an adhesive for bonding various substrates.

The following examples illustrate the invention.

Example 1

A one liter stainless steel autoclave is charged with 148 g of phthalic anhydride, 46.4 g of propylene oxide, 22.8 g of allylglycidylether, 11.6 g of allyl alcohol and 0.5 g of dimethylbenzylamine. The autoclave is closed and the mixture is heated at 100°C for 3 hours and then 46 g of propylene oxide are added to the reaction mixture. The reaction is continued for one further hour. Then the excess of propylene oxide is removed. A polyester having a molecular weight of 1,200 is obtained.

A mixture of 100 g of this polyester and 9.5 g of acetic anhydride is heated at 120°C for 2 hours. Then the excess of acetic anhydride is removed under reduced pressure. 22 g of the acetylated polyester obtained are reacted with 8.65 g of methyldichlorosilane in the presence of 0.0035 g chloroplatinic acid at 80°C for 3 hours. Then the excess of methyldichlorosilane is removed under reduced pressure. Then 20 ml of mehtanol and 20 ml of methyl orthoformate are added to the residue. The mixture is stirred for one hour at room temperature and then low boiling substances are removed under reduced pressure to obtain a polyester containing silyl groups.

Example 2

A solution of 2 g azobisisobutyronitrile in a mixture of 30 g styrene, 16 g allyl methacrylate, 20 g

methyl methacrylate, 19 g n-butyl methacrylate, 14 g n-butyl acrylate, 1 g maleic anhydride and 2 g n-dodecylmercaptane are added dropwise to 100 g of toluene heated at 90°C. After the addition the mixture is heated for 10 hours. A vinyl polymer containing unsaturated groups of the allyl type and having a molecular weight of 8000 is obtained. The infra-red absorption spectrum shows the typical carbon-carbon double bond absorption at 1648 $cm^{-1}$.

20 g of the solution of the vinyl copolymer containing unsaturated groups of the allyl type are mixed with 1.5 g of methyldimethoxysilane and 0.0005 g of chloroplatinic acid in isopropanol. The mixture is heated at 90°C for 6 hours in a sealed pressure bottle to obtain a vinyl polymer containing silyl groups. The absorption at 1648 $cm^{-1}$ in its infrared absorption spectrum is no longer observed.

Example 3

The reaction is carried out in the same way as in example 2 except that 31 g of diallyl phthalate are used instead of 16 g allyl methylate. A diallyl phthalate copolymer containing silyl groups is obtained.

Example 4

A solution of 2 g azobisisobutyronitrile in a mixture of 30 g styrene, 27 g $\gamma$-methacryloxypropyltrimethoxysilane, 20 g methyl methacrylate, 19 g n-butyl methacrylate, 14 g n-butyl acrylate, 2 g acrylamide, 5 g n-butanol and 2 g n-dodecylmercaptane are added dropwise to 100 g of toluene heated at 100°C. After the addition the mixture is heated for 10 hours. A vinyl polymer containing silyl groups and having a molecular weight of 9000 is obtained.

Example 5

100 g of a diallyl phthalate prepolymer (trade name Dap L manufactured by Osaka Soda Co., Ltd., iodine value about 80), 0.00001 g of chloroplatinic acid and 1 g of hydroquinone are dissolved in 100 ml of toluene. Then 35 g of methyldiethoxysilane are added to this solution. The mixture is heated at 90°C for 5 hours. A diallyl phthalate prepolymer containing silyl groups is obtained.

A mixture consisting of 100 parts (calculated as solids) of a silyl groups-containing compound obtained in example 1 to 5 and 100 parts of titanium dioxide is milled in a ball mill and then an amino resin is added in the ratio shown in the following Table I. The composition obtained is cured by heating for 45 seconds at 280°C. The pencil hardness test and the staining test by rouge and marking ink are carried out. The table shows a comparison of the results obtained with the results for resin compositions which were cured with conventional tin catalysts (comparative examples).

TABLE I

| | * Amino resin (parts) | Pencil Hardness | ** Antistaining properties (wiping off by methanol) | | |
|---|---|---|---|---|---|
| | | | Rouge | *** Black marking ink | **** Red marking ink |
| Example 1 | 80S (30) | H | o | Δ | x |
| Example 2 | 22R (20) | 2H | o | o | Δ |
| (Comparative Example 2 | Dibutyltin dilaurate (20) | 2B | x | x | x |
| Example 3 | 208E–60 (30) | 2H | o | Δ | x |
| Example 4 | 60R (20) | 2H | o | o | Δ |
| (Comparative Example 4) | Dibutyltin dilaurate (20) | HB | x | x | x |
| Example 5 | 91–55 (30) | 2H | o | Δ | x |

* UVAN series manufactured by Mitsui Toatsu Chemicals, Inc.

80S specially modified melamine resin

208E–60 n-butylated melamine resin

22R n-butylated melamine resin

60R i-butylated melamine resin

91–55 butylated benzoguanamine resin

** o: Completely wiped off

Δ: A mark slightly left

x: Impassible to wipe off

*** Black marking ink: Oily ink (black)

**** Red marking ink: Oily ink (red)

**Claims**

1. A thermosetting resin composition comprising as essential components

(A) a polyester, vinyl polymer, diallyl phthalate monomer or prepolymer or diallyl phthalate copolymer containing in the molecule at least one silyl group having at least one hydrolyzable group or a mixture of at least two of the said polymers, and

(B) a hardening additive,

characterized in that it contains as component (B) an amino resin having a molecular weight of up to 5000.

2. The composition according to claim 1, wherein said silyl groups-containing compound is a polyester having a molecular weight of from 300 to 8000.

3. The composition according to claim 1, wherein said silyl groups-containing compound is a vinyl polymer having a molecular weight of from 300 to 20,000.

4. The composition according to claim 1, wherein said silyl groups-containing compound is a

diallyl phthalate monomer or a diallyl phthalate prepolymer having a molecular weight of 20,000 or less.

5. The composition according to claim 1, wherein said silyl groups-containing compound is a copolymer having a molecular weight of from 300 to 20,000 and comprising diallyl phthalate and an acrylic ester or methacrylic ester.

6. The composition according to claim 3, wherein said vinyl polymer is a polymer comprising acrylic ester or methacrylic ester.

7. The composition according to claim 1, wherein said amino resin is a melamine resin.

8. The composition according to claim 1, wherein said amino resin is a urea resin.

9. The composition according to claim 1, wherein said amino resin is a guanamine resin.

**Revendications**

1. Composition de résine thermodurcissable comprenant comme composants essentiels

(A) un polyester, un polymère vinylique, un monomère ou prépolymère de phtalate de diallyle ou un copolymère de phtalate de diallyle contenant dans la molécule au moins un groupe silyle ayant au moins un groupe hydrolysable ou un mélange d'au moins deux de ces polymères, et

(B) un additif de durcissage,

caractérisée en ce qu'elle contient, comme composant (B), une résine amino présentant un poids moléculaire allant jusqu'à 5.000.

2. Composition suivant la revendication 1, caractérisée en ce que le composé contenant des groupes silyle est un polyester ayant un poids moléculaire de 300 à 8000.

3. Composition suivant la revendication 1, caractérisée en ce que le composé contenant des groupes silyle est un polymère vinylique ayant un poids moléculaire de 300 à 20.000.

4. Composition suivant la revendication 1, caractérisée en ce que le composé contenant des groupes silyle est un monomère de phtalate de diallyle ou un prépolymère de phtalate de diallyle ayant un poids moléculaire de 20.000 ou moins.

5. Composition suivant la revendication 1, caractérisée en ce que le composé contenant des groupes silyle est un copolymère ayant un poids moléculaire de 300 à 20.000 et comprenant du phtalate de diallyle et un ester acrylique ou un ester méthacrylique.

6. Composition suivant la revendication 3, caractérisée en ce que le polymère vinylique est un polymère comprenant de l'ester acrylique ou de l'ester méthacrylique.

7. Composition suivant la revendication 1, caractérisée en ce que la résine amino est une résine de mélamine.

8. Composition suivant la revendication 1, caractérisée en ce que la résine amino est une résine d'urée.

9. Composition suivant la revendication 1, caractérisée en ce que la résine amino est une résine de guanamine.

**Patentansprüche**

1. Hitzehärtbare Kunstharzmasse, enthaltend als wesentliche Bestandteile:

(A) einen Polyester, ein Vinylpolymerisat, Diallylphthalat-Monomeres oder -Vorpolymerisat oder ein Diallylphthalat-Copolymerisat, enthaltend im Molekül mindestens eine Silylgruppe mit mindestens einer hydrolysierbaren Gruppe, oder Gemische von mindestens zwei der genannten Polymerisate, und

(B) einen Härtungszusatz,

dadurch gekennzeichnet, daß es als Komponente (B) ein Aminoharz mit einem Molekulargewicht bis zu 5000 enthält.

2. Kunstharzmasse nach Anspruch 1, dadurch gekennzeichnet, daß die Silylgruppen enthaltende Verbindung ein Polyester mit einem Molekulargewicht von 300 bis 8000 ist.

3. Kunstharzmasse nach Anspruch 1, dadurch gekennzeichnet, daß die Silylgruppen enthaltende Verbindung ein Vinylpolymerisat mit einem Molekulargewicht von 300 bis 20 000 ist.

4. Kunstharzmasse nach Anspruch 1, dadurch gekennzeichnet, daß die Silylgruppen enthaltende Verbindung ein Diallylphthalat-Monomer oder ein Diallylphthalat-Prepolymer mit einem Molekulargewicht von 20 000 oder weniger ist.

5. Kunstharzmasse nach Anspruch 1, dadurch gekennzeichnet, daß die Silylgruppen enthaltende Verbindung ein Copolymerisat mit einem Molekulargewicht von 300 bis 20 000 ist und Diallylphthalat und einen Acrylsäureester oder Methacrylsäureester (als Grundbausteine) enthält.

6. Kunstharzmasse nach Anspruch 3, dadurch gekennzeichnet, daß das Vinylpolymerisat ein Polymer aus einem Acrylsäureester oder Methacrylsäureester ist.

7. Kunstharzmasse nach Anspruch 1, dadurch gekennzeichnet, daß das Aminokunstharz ein Melaminharz ist.

8. Kunstharzmasse nach Anspruch 1, dadurch gekennzeichnet, daß das Aminokunstharz ein Harnstoffharz ist.

9. Kunstharzmasse nach Anspruch 1, dadurch gekennzeichnet, daß das Aminokunstharz ein Guanaminharz ist.